# EUROPÄISCHE PATENTSCHRIFT

(11) **EP 2 860 567 B1**
(45) Veröffentlichungstag und Bekanntmachung des Hinweises auf die Patenterteilung: **28.07.2021**
(21) Anmeldenummer: 14185415.8
(22) Anmeldetag: 18.09.2014
(51) Int. Cl.: G02B 21/00, G02B 21/36, G02B 27/58, G02B 6/06

(54) **Hochauflösende Scanning-Mikroskopie**
High resolution scanning microscopy
Microscopie à balayage haute résolution

(30) Priorität: 19.09.2013 DE 102013015932
(43) Veröffentlichungstag der Anmeldung: 15.04.2015
(73) Patentinhaber: Carl Zeiss Microscopy GmbH, 07745 Jena (DE)
(72) Erfinder: Huhse, Dieter, 12167 Berlin (DE)
(74) Vertreter: Loritz, Rainer

(56) Entgegenhaltungen:
- EP-A1- 2 249 194
- EP-A1- 2 317 362
- WO-A1-2005/031435
- WO-A1-2010/148068
- WO-A1-2013/135487
- WO-A2-2006/127967
- CN-A- 101 210 969
- US-A1- 2009 284 983
- US-A1- 2010 093 015
- US-B1- 7 242 468
- None

## Beschreibung

Die Erfindung bezieht sich auf ein Mikroskop zur hochauflösenden Scanning-Mikroskopie einer Probe, mit einer Beleuchtungseinrichtung zum Beleuchten der Probe, einer Abbildungseinrichtung zum Scannen eines Punkt- oder Linien-Spots über die Probe und zum Abbilden des Punkt- oder Linien-Spots in ein beugungsbegrenztes, ruhendes Einzelbild unter einem Abbildungsmaßstab in eine Detektionsebene, einer Detektoreinrichtung zum Erfassen des Einzelbildes in der Detektionsebene für verschiedene Scanpositionen mit einer Ortauflösung, welche unter Berücksichtigung des Abbildungsmaßstabes mindestens doppelt so groß ist wie eine Halbwertsbreite des beugungsbegrenzten Einzelbildes, einer Auswerteeinrichtung zum Auswerten einer Beugungsstruktur des Einzelbildes für die Scanpositionen aus Daten der Detektoreinrichtung und zum Erzeugen eines Bildes der Probe, das eine Auflösung aufweist, die über die Beugungsgrenze gesteigert ist. Die Erfindung bezieht sich weiter auf ein Verfahren zur hochauflösenden Scanning-Mikroskopie einer Probe, bei dem die Probe beleuchtet wird, ein scannend über die Probe geführter Punkt- oder Linien-Spot in ein Einzelbild abgebildet wird, wobei der Spot unter einem Abbildungsmaßstab beugungsbegrenzt in das Einzelbild abgebildet wird und das Einzelbild ruhend in einer Detektionsebene liegt, für verschiedene Scanpositionen das Einzelbild mit einer Ortauflösung erfaßt wird, welche unter Berücksichtigung des Abbildungsmaßstabes mindestens doppelt so groß ist wie eine Halbwertsbreite des beugungsbegrenzten Einzelbildes, so daß eine Beugungsstruktur des Einzelbildes erfaßt wird, für jede Scanposition die Beugungsstruktur des Einzelbildes ausgewertet wird und ein Bild der Probe erzeugt wird, das eine Auflösung aufweist, die über die Beugungsgrenze gesteigert ist.

Ein solches Mikroskop bzw. Mikroskopieverfahren ist beispielsweise aus der Veröffentlichung C. Müller und J. Enderlein, Physical Review Letters, 104, 198101 (2010), oder der EP 2317362 A1 bekannt, die auch weitere Nachweise zum Stand der Technik aufführt.

Dieser Ansatz erreicht eine Auflösungserhöhung, indem ein Spot beugungsbegrenzt auf eine Detektionsebene abgebildet wird. Die beugungsbegrenzte Abbildung bildet einen Punkt-Spot als Airy-Scheibe ab. Diese Beugungsscheibe wird in der Detektionsebene so erfaßt, daß ihre Struktur aufgelöst werden kann. Bezogen auf die Abbildungsleistung des Mikroskops erfolgt somit detektorseitig eine Überabtastung. Bei der Abbildung eines Punkt-Spots wird die Form der Airy-Scheibe aufgelöst. Durch geeignete Auswertung der Beugungsstruktur, die in den genannten Schriften geschildert ist und deren Offenbarung diesbezüglich vollumfänglich hier einbezogen sei, erreicht man eine Auflösungssteigerung um den Faktor 2 über die Beugungsgrenze.

Detektionsseitig ist es dabei jedoch unvermeidlich, daß für jeden Punkt, der auf der Probe in dieser Weise abgetastet wird, verglichen mit einem herkömmlichen Laser-Scanning-Mikroskop (nachfolgend auch als LSM abgekürzt) ein Einzelbild mit einem Vielfachen an Bildinformation aufgenommen werden muß. Erfaßt man die Struktur des Einzelbildes des Spots beispielsweise mit 16 Pixeln, hat man pro Spot nicht nur die 16-fache Datenmenge, ein einzelnes Pixel enthält auch im Mittel nur ein 1/16 der Strahlungsintensität, die bei einer üblichen Pinhole-Detektion auf den Detektor eines LSM fallen würde. Da die Strahlungsintensität über die Struktur des Einzelbildes, beispielsweise die Airy-Scheibe, natürlich nicht gleichmäßig verteilt ist, fällt am Rande dieser Struktur tatsächlich sogar noch bedeutend weniger Strahlungsintensität an, als der Mittelwert von 1/n bei n-Pixeln.

Man steht also vor der Aufgabe, detektorseitig Strahlungsmengen hochauflösend erfassen zu können. Herkömmliche CCD-Arrays, die üblicherweise in der Mikroskopie eingesetzt werden, erreichen kein hinreichendes Signal/RauschVerhältnis, so daß selbst eine Verlängerung der Bildaufnahmedauer, die per se schon als nachteilig in der Anwendung wäre, nicht weiterhelfen würde. APD-Arrays sind auch mit einem zu hohen Dunkelrauschen behaftet, so daß auch eine Verlängerung der Meßdauer in einem unzureichenden Signal/Rausch-Verhältnis resultieren würde. Gleiches gilt für CMOS-Detektoren, die zudem hinsichtlich der Detektorelementgröße nachteilig sind, da das beugungsbegrenzte Einzelbild des Spots auf zu wenige Pixel fallen würde. Ähnliche Bauraumprobleme bringen PMT-Arrays mit sich; die Pixel sind dort ebenfalls zu groß. Die Bauraumprobleme ruhen insbesondere daher, daß eine Realisierung eines Mikroskops zur Hochauflösung vom Entwicklungsaufwand wie von der Geräteverbreitung nur realisierbar ist, wenn eine Integration in bestehende LSM-Konstruktionen möglich ist. Hier sind jedoch bestimmte Größen des Einzelbildes vorgegeben. Ein flächenmäßig größerer Detektor könnte nur dann eingebracht werden, wenn zusätzlich eine Optik vorgesehen wird, die das Bild noch einmal signifikant, d. h. um mehrere Größenordnungen aufweitet. Eine solche Optik gestaltet sich, will man die beugungsbegrenzte Struktur ohne weitere Abbildungsfehler erhalten, als sehr aufwendig.

Es sind im Stand der Technik andere Verfahren bekannt, welche die geschilderten detektionsseitigen Probleme bei der Hochauflösung vermeiden. So ist beispielsweise in der EP 1157297 B1 ein Verfahren angesprochen, bei dem mittels strukturierter Beleuchtung nicht linearer Prozesse ausgenützt werden. Eine strukturierte Beleuchtung wird in mehreren Dreh- und Ortslagen über die Probe verschoben und die Probe in diesen unterschiedlichen Zuständen auf einen Weitfelddetektor abgebildet, für den die geschilderten Beschränkungen nicht bestehen.

Ein Verfahren, das ohne die geschilderten Detektoreinschränkungen ebenfalls eine Hochauflösung (also eine Auflösung eines Probenbildes jenseits der Beugungsgrenze) erreicht, ist aus der WO 2006127692 und der DE 102006021317 bekannt. Dieses mit PALM abgekürzte Verfahren verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden; nicht aktivierte Moleküle senden auch nach Einstrahlung von Anregungsstrahlung keine Fluoreszenzstrahlung aus. Die Aktivierungsstrahlung schaltet die Aktivierungssubstanz also in einen Zustand, in dem sie zur Fluoreszenz anregbar ist. Man spricht deshalb allgemein von einem Umschaltsignal. Dieses wird nun so aufgebracht, daß zumindest ein gewisser Anteil der aktivierten Markierungsmoleküle von benachbarten, ebenfalls aktivierten Markierungsmolekülen so beabstandet ist, daß die aktivierten Markierungsmoleküle gemessen an der optischen Auflösung der Mikroskopie getrennt oder nachträglich trennbar sind. Man spricht von Isolierung der aktivierten Moleküle. Für diese isolierten Moleküle ist es einfach, das Zentrum deren auflösungsbegrenzt bedingter Strahlungsverteilung zu ermitteln und somit rechnerisch die Lage der Moleküle mit höherer Genauigkeit zu bestimmen, als es die optische Abbildung eigentlich zuläßt. Zum Abbilden der gesamten Probe benutzt das PALM-Verfahren die Tatsache, daß die Wahrscheinlichkeit, mit der ein Markierungsmolekül durch das Umschaltsignal bei gegebener Intensität des Umschaltsignals aktiviert wird, für alle Markierungsmoleküle gleich ist. Die Intensität des Umschaltsignals wird also so aufgebracht, daß die gewünschte Isolierung erfolgt. Diese Verfahrensschritte werden so lange wiederholt, bis möglichst alle Markierungsmoleküle einmal in einer Teilmenge, die zur Fluoreszenz angeregt wurde, enthalten waren.

Im Rahmen der Erfindung wird der auf der Probe abgetastete Spot ruhend in eine Detektionsebene abgebildet. Die Strahlung aus der Detektionsebene wird dann nicht-abbildend umverteilt und auf das Detektorarray geleitet. Der Begriff "nicht-abbildend" ist dabei auf das in der Detektionsebene vorhandene Einzelbild bezogen. Einzelne Flächenbereiche dieses Einzelbildes können natürlich dennoch gemäß den Abbildungsgesetzen abgebildet werden. Insofern kann zwischen Detektorarray und Umverteilungselement durchaus abbildende Optik liegen. Das in der Detektionsebene vorliegende Einzelbild bleibt jedoch bei der Umverteilung als solches nicht erhalten.

Der Begriff "beugungsbegrenzt" soll nicht auf die Beugungsgrenze gemäß der Abbe'schen Theorie beschränkt sein, sondern auch Fälle erfassen, in denen auf Grund realer Unzulänglichkeiten oder Einschränkungen das theoretische Maximum um 20 % verfehlt wird. Auch dann hat das Einzelbild eine Struktur, die hier als Beugungsstruktur bezeichnet wird. Sie wird überabgetastet.

Dieses Prinzip ermöglicht es, ein Detektorarray zu verwenden, das in seiner Größe nicht zum Einzelbild paßt. Das Detektorarray ist in mindestens einer Ausdehnung größer als das zu erfassende Einzelbild. Unter den Begriff der unterschiedlichen geometrischen Ausbildung fallen sowohl eine unterschiedliche Ausdehnung des Detektorarrays als auch eine Anordnung mit unterschiedlichen Aspektverhältnis bezogen auf Höhe und Breite der Ausdehnung des Einzelbildes in der Detektionsebene. Die Pixel des Detektorarrays können zusätzlich für die erforderliche Auflösung zu groß sein. Auch ist es nun zulässig, daß der Umriß der Pixelanordnung des Detektorarrays grundlegend anders ist, als der Umriß, den das Einzelbild in der Detektionsebene hat. Letztlich hat das Detektorarray erfindungsgemäß eine andere Größe als das Einzelbild in der Detektionsebene. Die Umverteilung im Verfahren bzw. das Umverteilungselement im Mikroskop ermöglichen es, ein Detektorarray zu wählen, ohne die Abmessungseinschränkungen und Pixelgrößeneinschränkungen beachten zu müssen, welche durch das Einzelbild und dessen Größe entstehen. Insbesondere kann als Detektorarray eine Detektorzeile verwendet werden.

Das Bild der Probe entsteht LSM-üblich durch Abtasten der Probe mit dem Spot aus einer Vielzahl von Einzelbildern, die jeweils einem anderen Abtastort, also einer anderen Scanposition, zugeordnet sind.

Das Konzept gemäß dem der Erfindung zugrundeliegenden Prinzip kann auch in parallelisierter Form für mehrere Spots gleichzeitig durchgeführt werden, wie dies für die Laserscanningmikroskopie bekannt ist. Es werden dann mehrere Spots auf der Probe scannend abgetastet, und die Einzelbilder der mehreren Spots liegen ruhend in der Detektionsebene nebeneinander. Sie werden dann entweder von einem gemeinsamen Umverteilungselement, das flächenmäßig entsprechend groß ist bzw. von mehreren einzelnen Umverteilungselementen umverteilt und dann auf ein entsprechend größeres einzelnes oder mehrere einzelne Detektorarrays geleitet.

Die nachfolgende Beschreibung konzentriert sich exemplarisch auf die Abtastung mit einem einzelnen Punkt-Spot. Dies soll jedoch nicht als Einschränkung verstanden werden, und die erläuterten Merkmale und Grundsätze gelten sinngemäß auch für die parallel Abtastung mehrerer Punkt-Spots wie auch für die Verwendung eines Linienspots. Letzterer ist natürlich nur quer zur Linienerstreckung beugungsbegrenzt, so daß die diesbezüglichen Merkmale dieser Beschreibung dann nur in einer Richtung (quer zur Linienerstreckung) gelten.

Durch das Vorgehen gemäß dem der Erfindung zugrundeliegenden Prinzip kann das ISM-Verfahren bei zufriedenstellender Geschwindigkeit und mit vertretbarem apparativen Aufwand ausgeführt werden. Das der Erfindung zugrundeliegende Prinzip eröffnet für ein hochauflösendes Mikroskopieprinzip ein breites Anwendungsfeld, das so bislang nicht gegeben war.

Zur Umverteilung bzw. als Umverteilungselement wird ein Bündel aus Lichtleitfasern verwendet. Diese können vorzugsweise als Multimode-Lichtleitfasern ausgeführt werden. Das Bündel hat einen Eingang, der in der Detektionsebene angeordnet ist und in seinem Umriß den Ausdehnungen des beugungsbegrenzten Einzelbildes in der Detektionsebene genügt. Am Ausgang sind die Lichtleitfasern hingegen in der geometrischen Anordnung angeordnet, welche durch das Detektorarray vorgegeben ist, und welche sich von der des Eingangs unterscheidet. Die ausgangsseitigen Enden der Lichtleitfasern können dabei direkt auf die Pixel des Detektorarrays geführt werden. Besonders vorteilhaft ist es, wenn der Ausgang des Bündels in einem Stecker zusammengefaßt ist, der bequem auf eine Detektorzeile, beispielsweise eine APD- oder PMT-Zeile aufgesteckt werden kann.

Für das Verständnis des der Erfindung zugrundeliegenden Prinzips ist es wichtig, zwischen den Pixeln des Detektorarrays und Bildpixeln zu unterscheiden, mit denen das Einzelbild in der Detektionsebene aufgelöst wird. Jedes Bildpixel ist i. d. R. genau einem Pixel des Detektorarrays zugeordnet; hinsichtlich ihrer Anordnung sind die beiden aber unterschiedlich. Kennzeichnend für das der Erfindung zugrundeliegende Prinzip ist es unter anderem, daß in der Detektionsebene die Strahlung an Bildpixeln aufgenommen wird, welche hinsichtlich ihrer Größe und Anordnung eine Überabtastung des Einzelbildes bewirken. Auf diese Weise wird die Struktur des Einzelbildes aufgelöst, die aufgrund der beugungsbegrenzten Erzeugung des Einzelbildes eine Beugungsstruktur ist. Das Umverteilungselement hat eine Eingangsseite, an der diese Bildpixel vorgesehen sind. Die Eingangsseite liegt in der Detektionsebene. Das Umverteilungselement leitet die Strahlung an jedem Bildpixel zu einem der Pixel des Detektorarrays. Die Zuordnung von Bildpixeln zu Pixeln des Detektorarrays hält die Bildstruktur nicht aufrecht, weshalb die Umverteilung bezogen auf das Einzelbild nicht-abbildend ist. Das der Erfindung zugrundeliegende Prinzip könnte also auch dadurch charakterisiert werden, daß in einem gattungsgemäßen Mikroskop die Detektoreinrichtung ein nicht-abbildendes Umverteilungselement aufweist, das eine in der Detektionsebene liegende Eingangsseite aufweist, an der die Strahlung mit Bildpixeln aufgenommen wird. Das Umverteilungselement weist weiter eine Ausgangsseite auf, an der die an den Bildpixeln aufgenommene Strahlung Pixeln eines Detektorarrays zugeführt wird, wobei die Strahlung von der Eingangsseite zur Ausgangsseite bezogen auf das Einzelbild nicht-abbildend umverteilt ist. Analog könnte das Verfahren gemäß dem der Erfindung zugrundeliegenden Prinzip dadurch charakterisiert werden, daß bei einem gattungsgemäßen Verfahren die Strahlung in der Detektionsebene mit Bildpixeln aufgenommen wird, die bezogen auf das Einzelbild nicht-abbildend auf Pixel des Detektorarrays umverteilt werden. Das Detektorarrays unterscheidet sich hinsichtlich Anordnung und/Größe seiner Pixel von der Anordnung und/oder Größe der Bildpixel in der Detektionsebene. Weiter sind die Bildpixel in der Detektionsebene vom Umverteilungselement so bereitgestellt, daß bezogen auf die Beugungsgrenze die Beugungsstruktur des Einzelbildes überabgetastet ist.

Bei hochempfindlichen Detektorarrays ist es bekannt, daß benachbarte Pixel bei hohen Strahlungsintensitätsunterschieden eine Störung durch Übersprechen zeigt. Um solches zu vermeiden, ist eine Weiterbildung bevorzugt, bei der die Lichtleitfasern so vom Eingang zum Ausgang geführt sind, daß am Ausgang benachbarte Lichtleitfasern auch am Eingang benachbart sind. Da das beugungsbegrenzte Einzelbild keine sprungartigen Strahlungsintensitätsänderungen zeigt, stellt eine derartige Ausgestaltung des Umverteilungselementes automatisch sicher, daß nebeneinanderliegende Pixel des Detektorarrays möglichst geringe Strahlungsintensitätsunterschiede erhalten, was das Übersprechen minimiert.

Bei LSM werden je nach erwünschter Auflösung unterschiedliche Objektive verwendet. Der Wechsel eines Objektivs verändert die Ausdehnung eines Einzelbildes in der Detektionsebene. Es ist deshalb bevorzugt, der Detektionsebene in Abbildungsrichtung eine Zoomoptik zur Anpassung der Größe des Einzelbildes an die der Detektoreinrichtung vorzuordnen. Eine solche Zoomoptik variiert die Größe des Einzelbildes in einem Prozentbereich deutlich kleiner 100%, ist also sehr viel einfacher auszuführen, als eine Vervielfachung der Größe des Einzelbildes, die eingangs als nachteilig geschildert wurde.

Die Beleuchtung der Probe erfolgt bevorzugt wie in einem üblichen LSM ebenfalls scannend, obwohl dies nicht zwingend ist. Man erreicht dann allerdings die maximale Auflösungssteigerung. Beleuchtet man die Probe scannend, ist es zweckmäßig, daß die Beleuchtungseinrichtung und die Abbildungseinrichtung eine gemeinsame Scaneinrichtung haben, welche einen Beleuchtungsspot über die Probe führt und zugleich den mit dem Beleuchtungsspot zusammenfallenden Spot, an dem die Probe abgebildet wird, in Bezug auf den Detektor wieder descannt, so daß das Einzelbild ruhend in der Detektionsebene ist. Bei einem solchen Aufbau kann man die Zoomoptik in dem gemeinsamen Teil von Beleuchtungs- und Abbildungseinrichtung setzen. Sie erlaubt es dann nicht nur, die Anpassung des Einzelbildes an die Größe des Detektors in der Detektionsebene vorzunehmen, sondern erlaubt auch zusätzlich die verfügbare Beleuchtungsstrahlung ohne Randverluste vollständig in die Objektivpupille, welche sich mit Wahl des Objektives ändern kann, einzukoppeln.

Ein strahlungsintensitätabhängiges Übersprechen zwischen nebeneinanderliegenden Pixeln des Detektorarrays kann, wie bereits eingangs erwähnt, bei Umverteilung mittels Lichtleitfaserbündel durch geeignete Anordnung der Lichtleitfasern im Bündel reduziert werden. Zusätzlich oder alternativ ist es auch möglich, eine Kalibrierung durchzuführen. Dazu wird jede Lichtleitfaser nacheinander mit Strahlung beaufschlagt und das Störsignal in benachbarten Pixeln erfaßt. Auf diese Weise wird eine Kalibriermatrix aufgestellt, mit der bei der späteren Mikroskopie der Probe ein strahlungsintensitätsabhängiges Übersprechen nebeneinanderliegender Pixel korrigiert wird.

Die Auflösung der Beugungsstruktur des Einzelbildes erlaubt es zusätzlich, eine Bewegungsrichtung des Spots zu ermitteln, entlang dieser während des Abtastens der Probe verschoben wird. Diese Bewegungsrichtung ist zwar grundsätzlich aus der Mechanik des Scanners (beispielsweise eines Scanspiegels oder eines beweglichen Probentisches) bekannt, jedoch ergeben sich hier mechanisch bedingte Restungenauigkeiten. Diese können eliminiert werden, indem Signale einzelner Pixel des Detektorarrays mittels Kreuzkorrelation ausgewertet werden. Dabei macht man sich zunutze, daß sich, bezogen nebeneinanderliegende Bildpixel in der Probe aufgrund der beugungsbegrenzten Abbildung des Spots in einem gewissen Maß überlappen, ihre Zentren jedoch nebeneinander liegen. Unterzieht man die Signale solcher Bildpixel einer Kreuzkorrelation, kann man eine Restungenauigkeit, welche aufgrund unvermeidlicher Toleranzen der Scanmechanik verbleibt, reduzieren bzw. vollständig eliminieren.

Neben der erhöhten Auflösung läßt sich über die räumliche und zeitliche Korrelation der Signale aus einer Meßreihe der einzelnen Detektorelemente (die Bildpixeln in der Detektionsebene zugeordnet sind) eine zeitliche Veränderung der Fluoreszenz im vom Spot erfaßten Detektionsvolumen erfassen, z. B. können aus einer zeitlichen Korrelation wie bei der Fluoreszenzkorrelationsspektroskopie Diffusionskoeffizienten bestimmt werden und auch durch das Einbeziehen der räumlichen Korrelation zwischen Bildpixeln gerichtete Diffusion und Diffusionsbarrieren visualisiert werden. Bewegungsabläufe der Fluoreszenzmoleküle sind darüber hinaus auch für Trackinganwendungen von großem Interesse, da dort der Beleuchtungsspot der Bewegung der Fluoreszenzmoleküle folgen soll. Die hier beschriebene Anordnung erlaubt es hochgenau die Bewegungsrichtung schon innerhalb einer Pixelbeichtungszeit zu ermitteln. Es ist deshalb als Weiterbildung bevorzugt, daß Veränderungen in der Probe erfaßt werden, indem bei in der Probe ruhendem Punkt- oder Linien-Spot eine zeitliche Veränderung des beugungsbegrenzten Einzelbildes ermittelt und ausgewertet wird.

Das Vorgehen gemäß dem der Erfindung zugrundeliegenden Prinzip ermöglicht weiter bei gescannter Beleuchtung die Beleuchtungsverteilung zu modifizieren, beispielsweise mittels eines Phasenfilters. Kann damit sehr einfach das Verfahren realisiert werden, wie es beschrieben ist in Gong et al., Opt. Let., 34, 3508 (2009).

Soweit hier ein Verfahren beschrieben wird, realisiert ein Steuergerät diese Verfahrensschritte im Betrieb des Mikroskops.

Nachfolgend wird das der Erfindung zugrundeliegende Prinzip beispielsweise anhand der beigefügten Zeichnungen Fig. 1 bis 8 noch näher erläutert. Es zeigen:
- Fig. 1: eine Schemadarstellung eines Laser-Scanning-Mikroskops zur hochauflösenden Mikroskopie,
- Fig. 2: eine vergrößerte Darstellung einer Detektoreinrichtung des Mikroskops der Fig. 1;
- Fig. 3: und 4 Draufsichten auf mögliche Ausführungsformen der Detektoreinrichtung 19 in einer Detektionsebene,
- Fig. 5: eine Weiterbildung des Mikroskops der Fig. 1 durch eine Zoom-Optik zur Anpassung der Größe des Detektorfelde,
- Fig. 6: eine Abwandlung des Mikroskops der Fig. 5 hinsichtlich der Zoom-Optik sowie hinsichtlich einer Weiterbildung zur mehrfarbigen Abbildung,
- Fig. 7: eine Abwandlung des Mikroskops der Fig. 1, wobei die Abwandlung die Detektoreinrichtung betrifft, und
- Fig. 8: eine Abwandlung der Detektoreinrichtung 19 der Fig. 7.

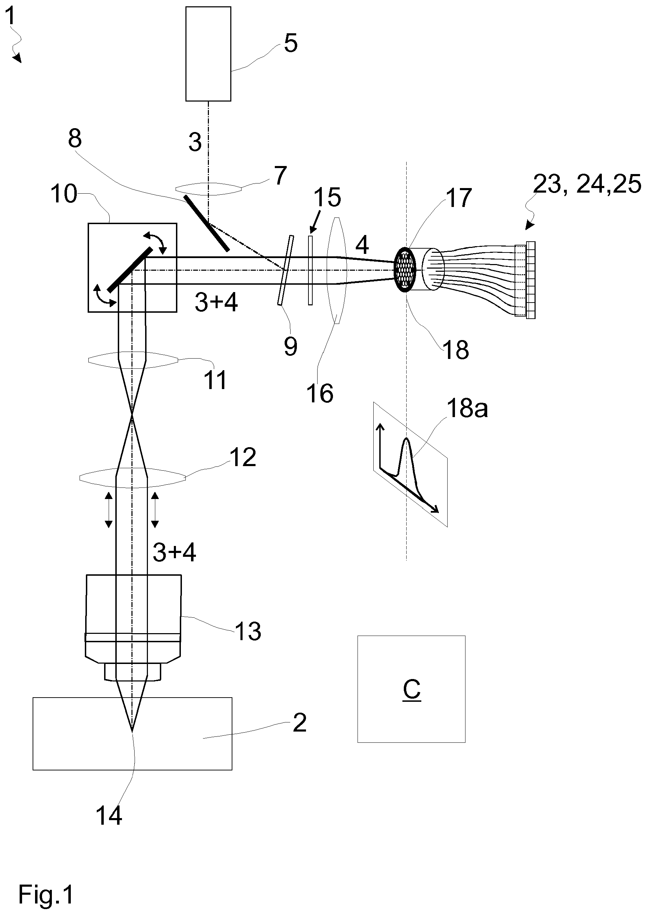

Fig. 1 zeigt schematisch ein Laserscanningmikroskop 1, das zum Mikroskopieren einer Probe 2 ausgebildet ist. Das Laserscanningmikroskop (nachfolgend als LSM abgekürzt) 1 wird von einem Steuergerät C gesteuert und umfaßt einen Beleuchtungsstrahlengang 3 sowie einen Abbildungsstrahlengang 4. Der Beleuchtungsstrahlengang beleuchtet einen Spot in der Probe 2, und der Abbildungsstrahlengang 4 bildet diesen Spot beugungsbegrenzt zur Detektion ab. Beleuchtungsstrahlengang 3 und Abbildungsstrahlengang 4 teilen sich eine Vielzahl von Elementen. Dies ist aber ebenso wenig zwingend, wie eine gescannte Spot-Beleuchtung der Probe 2. Diese könnte auch weitfeldbeleuchtet werden.

Die Beleuchtung der Probe 2 erfolgt im LSM 1 mittels eines bereitgestellten Laserstrahls 5, der über einen nicht weiter funktionell erforderlichen Umlenkspiegel 6 und eine Linse 7 auf einen Spiegel 8 eingekoppelt wird. Der Spiegel 8 sorgt dafür, daß der Laserstrahl 5 unter einem Reflexionswinkel auf einen Emissionsfilter 9 fällt. Zur übersichtlicheren Darstellung ist für den Laserstrahl 5 lediglich dessen Hauptachse eingezeichnet.

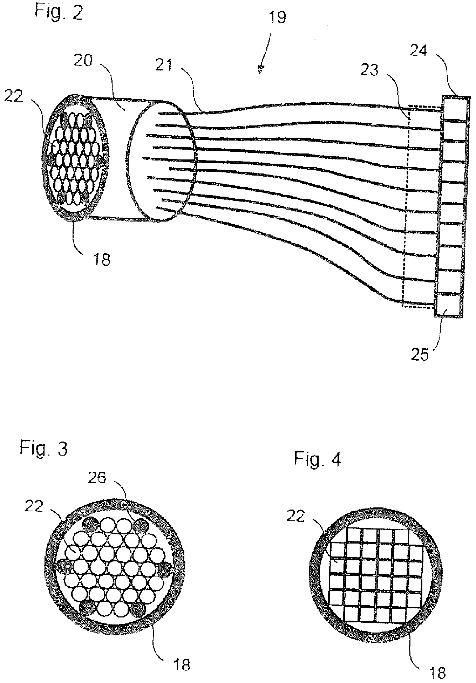

Nach Reflexion am Emissionsfilter 9 wird der Laserstrahl 5 von einem Scanner 10 zweiachsig abgelenkt und mittels Linsen 11 und 12 durch ein Objektiv 13 in einen Spot 14 in der Probe 2 fokussiert. Der Spot ist dabei in der Darstellung der Fig. 1 punktförmig, es ist jedoch auch ein linienförmiger Spot möglich. Im Spot 14 angeregte Fluoreszenzstrahlung wird über das Objektiv 13, die Linsen 11 und 12 wieder zum Scanner 10 gelangt, nachdem in Abbildungsrichtung wiederum ein ruhender Lichtstrahl vorliegt. Dieser fällt durch die Emissionsfilter 9 und 15, welche die Funktion haben, die Fluoreszenzstrahlung im Spot 14 hinsichtlich ihrer Wellenlänge zu selektieren und insbesondere von der Beleuchtungsstrahlung des Laserstrahls 5, die beispielsweise als Anregungsstrahlung dienen kann, zu trennen. Eine Linse 16 sorgt dafür, daß insgesamt der Spot 14 in ein beugungsbegrenztes Bild 17 abgebildet wird, welches in einer Detektionsebene 18 liegt. Die Detektionsebene 18 ist eine konjugierte Ebene zur Ebene, in welcher der Spot 14 in der Probe 2 liegt. Das Bild 17 des Spots 14 wird in der Detektionsebene 18 von einer Detektoreinrichtung 19 aufgenommen, die nachfolgend anhand der Figuren 2 bis 4 näher erläutert wird. Wesentlich ist hier, daß die Detektoreinrichtung 19 das beugungsbegrenzte Bild 17 des Spots 14 in der Detektionsebene 18 räumlich auflöst.

Die Intensitätsverteilung des Spots über den Detektionsquerschnitt (Gaussverteilung) in 18 ist als 18a darunter in Fig. 1 dargestellt.

Das Steuergerät C steuert alle Komponenten des LSM 1, insbesondere Scanner 10 und Detektoreinrichtung 19. Das Steuergerät nimmt für verschiedene Scanstellungen die Daten jedes einzelnen Bildes 17 auf, analysiert dessen Beugungsstruktur und erzeugt ein hochaufgelöstes Gesamtbild der Probe 2.

Das LSM 1 der Fig. 1 ist exemplarisch für einen einzigen Spot, der auf der Probe abgetastet wird, dargestellt. Es kann jedoch zugleich auch zur Abtastung gemäß einem Linien-Spot verwendet werden, der sich beispielsweise senkrecht zur Zeichnungsebene der Fig. 1 erstreckt. Auch ist es möglich, das LSM 1 der Fig. 1 so auszuführen, daß mehrere nebeneinanderliegende Punkt-Spots in der Probe abgetastet werden. Ihre entsprechenden Einzelbilder 17 liegen dann in der Detektionsebene 18 ebenfalls nebeneinander. Die Detektoreinrichtung 19 ist dann entsprechend ausgestaltet, um die nebeneinanderliegenden Einzelbilder 17 in der Detektionsebene 18 zu erfassen.

Die Detektoreinrichtung 19 ist vergrößert in Fig. 2 dargestellt. Sie besteht aus einem Lichtleitfaserbündel 20, welches ein Detektorarray 24 speist. Das Lichtleitfaserbündel 20 ist aus Einzellichtfasern 21 aufgebaut. Die Enden der Lichtleitfasern 21 bilden den Lichtleitfaserbündeleingang 22, der in der Detektionsebene 18 liegt. Die einzelnen Enden der Lichtleitfasern 21 stellen somit Pixel dar, mit denen das beugungsbegrenzte Bild 17 des Spots 14 aufgenommen wird. Da der Spot 14 in der Ausführungsform der Fig. 1 exemplarisch ein Punkt-Spot ist, ist das Bild 17 ein Airy-Scheibchen, dessen Ausdehnung innerhalb des Kreises liegt, welcher in den Figuren 1 und 2 die Detektionsebene 18 veranschaulicht. Die Ausdehnung des Lichtleitfaserbündeleingangs 22 ist also so groß, daß damit die Ausdehnung der Airy-Scheibe abgedeckt wird. Die einzelnen Lichtleitfasern 21 im Leichtleitfaserbündel 20 sind an ihren Ausgängen in eine andere geometrische Anordnung gebracht, als am Lichtleitfaserbündeleingang 22, nämlich in Form eines längserstreckten Steckers 23, in dem die ausgangsseitigen Enden der Lichtleitfasern 21 nebeneinander liegen. Der Stecker 23 ist passend zur geometrischen Anordnung der Detektorzeile 24 ausgebildet, d. h. jedes ausgangsseitige Ende einer Lichtleitfaser 21 liegt genau vor einem Pixel 25 der Detektorzeile 24.

Die geometrische Ausdehnung des Umverteilungselementes ist ganz grundsätzlich, d. h. unabhängig von seiner Realisierung, die in Fig. 4 durch ein Faserbündel erfolgt, eingangsseitig an die Ausdehnung des Einzelbildes (bzw. im Falle mehrerer Punkt-Spots der nebeneinanderliegenden Einzelbilder) angepaßt. Das Umverteilungselement hat die Funktion, aus der Detektionsebene 18 die Strahlung so aufzunehmen, daß gemessen am Abtasttheorem die Intensitätsverteilung des Einzelbildes 17 bezogen auf die Beugungsgrenze überabgetastet wird, das Umverteilungselement hat also in der Detektionsebene 18 liegende Pixel (in der Bausweise der Fig. 3 durch die Eingangsenden der Lichtleitfasern gebildet), die mindestens um den Faktor 2 kleiner sind als die kleinste auflösbare Struktur, die sich aus der Beugungsgrenze unter Berücksichtigung des Abbildungsmaßstabes in der Detektionsebene 18 ergibt.

Natürlich ist die Verwendung eines Steckers 23 nur eine von vielen Möglichkeiten, die ausgangsseitigen Enden der Lichtleitfasern 21 vor den Pixeln 25 anzuordnen. Gleichermaßen ist es möglich, andere Verbindungen zu verwenden. Auch können die einzelnen Pixel 25 direkt mit den Lichtleitfasern 21 fusioniert werden. Es ist nicht einmal erforderlich, eine Detektorzeile 24 zu verwenden; stattdessen kann für jedes Pixel 25 ein einzelner Detektor verwendet werden.

Die Figuren 3 und 4 zeigen mögliche Ausführungsformen des Lichtleitfaserbündeleingangs 22. Die Lichtleitfasern 21 können am Lichtleitfaserbündeleingang 22 miteinander verschmolzen werden. Hierdurch wird ein höherer Füllfaktor erreicht, d. h. Lücken zwischen den einzelnen Lichtleitfasern 21 am Lichtleitfaserbündeleingang 22 werden minimiert. Das Verschmelzen führ andererseits zu einem gewissen Übersprechen zwischen benachbarten Lichtleitfasern. Möchte man dieses vermeiden, können die Lichtleitfasern geklebt werden. Auch ist eine quadratische Anordnung der Enden der Lichtleitfasern 21 möglich, wie Fig. 4 zeigt.

Bevorzugt sind die einzelnen Lichtleitfasern 21 so den einzelnen Pixeln 25 des Detektorarrays 24 zugeordnet, daß am Lichtleitfaserbündeleingang 22 nebeneinander liegende Lichtleitfasern 21 auch am Detektorarray 24 nebeneinander liegen. Durch dieses Vorgehen minimiert man Übersprechen zwischen benachbarten Pixeln 25, das beispielsweise durch Streustrahlung oder in der Signalverarbeitung der einzelnen Pixel 25 auftreten kann. Ist das Detektorarray 24 eine Zeile, kann man die entsprechende Anordnung dadurch erreichen, indem die Reihenfolge der Einzellichtleitfasern auf der Detektorzeile durch eine Spirale festgelegt wird, welche in Draufsicht auf die Detektionsebene 18 die Einzellichtleitfasern nacheinander verbindet.

Fig. 3 zeigt weiter noch Blindfasern 26, die in den Ecken der Anordnung der Lichtleitfasern 21 am Lichtleitfaserbündeleingang 22 liegen. Diese Blindfasern sind nicht auf Pixel 25 des Detektorarrays geführt. An den Orten der Blindfasern wäre keine für die Auswertung der Signale erforderliche Signalintensität mehr vorhanden. Man kann dadurch die Anzahl der Lichtleitfasern 21 und damit die Anzahl der Pixel 25 in der Detektorzeile 24 oder dem Detektorarray so reduzieren, daß beispielsweise mit 32 Pixeln gearbeitet werden kann. Solche Detektorzeilen 24 sind bereits anderweitig in Laser-Scanning-Mikroskopen im Einsatz, was den Vorteil hat, daß die Signalauswerteelektronik in solchen Laser-Scanning-Mikroskopen nur einmal vorgehalten werden muß und zwischen einer bereits bestehenden Detektorzeile 24 und der durch die Detektoreinrichtung 19 hinzugekommenen weiteren Detektorzeile 24 umgeschaltet wird.

Gemäß Fig. 4 werden Lichtleitfasern mit quadratischer Grundform für das Bündel verwendet. Sie haben ebenfalls einen hohen Abdeckungsgrad in der Detektionsebene, sammeln die Strahlung also effizient auf.

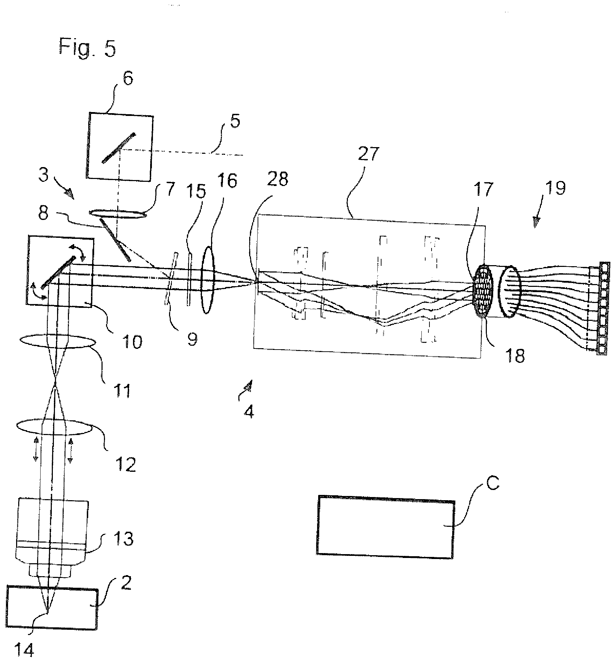

Fig. 5 zeigt eine Weiterbildung des LSM 1 der Fig. 1, in dem der Detektionsebene 18 eine Zoomoptik 27 vorgeordnet ist. Die konjugierte Ebene, in welcher bei der Bauweise der Fig. 1 die Detektionsebene 18 angeordnet wurde, bildet nun eine Zwischenbildebene 28, aus welcher die Zoomoptik 27 die Strahlung aufnimmt und zur Detektionsebene 18 leitet. Die Zoomoptik 27 erlaubt es, das Bild 17 optimal an die Ausdehnung des Eingangs der Detektoreinrichtung 19 anzupassen.

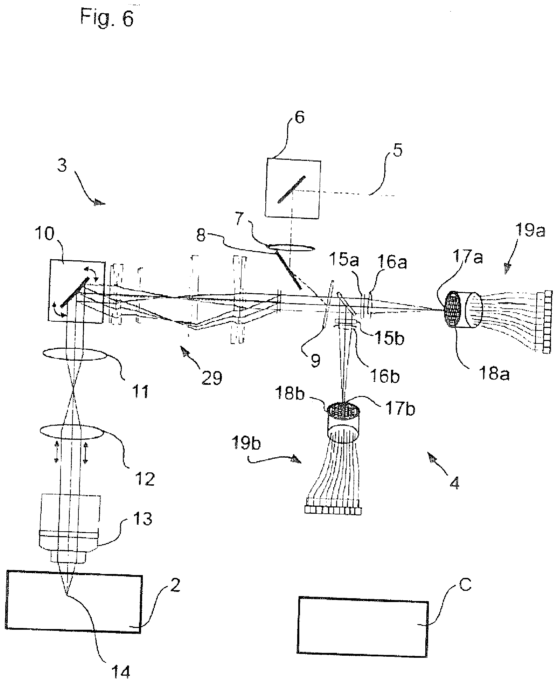

Fig. 6 zeigt eine nochmalige Abwandlung des Laser-Scanning-Mikroskops 1 der Fig. 1. Zum einen ist hier die Zoomoptik als Zoomoptik 29 so angeordnet, daß sie im Teil des Strahlenganges liegt, der sowohl vom Beleuchtungsstrahlengang 3 als auch vom Abbildungsstrahlengang 4 durchlaufen wird. Man erhält damit den Vorteil, daß nicht nur die Größe des Bildes 17 auf der Eingangsseite der Detektoreinrichtung 19 angepaßt werden kann, es kann auch bezüglich des Abbildungsstrahlenganges 4 die Pupillenfüllung des Objektivs 13 und damit die Ausnutzung des Laserstrahls 5 angepaßt werden.

Zusätzlich ist in Fig. 6 das LSM 1 noch zweikanalig ausgebildet, indem dem Emissionsfilter 9 ein Stahlteiler nachgeordnet ist, welcher die Strahlung in zwei getrennte Farbkanäle abtrennt. Die entsprechenden Elemente der Farbkanäle entsprechen jeweils den Elementen, die im LSM 1 der Fig. 1 dem Emissionsfilter 9 in Abbildungsrichtung nachgeordnet sind. Die Farbkanäle sind in der Darstellung der Fig. 6 durch das Bezugszeichensuffix "a" bzw. "b" unterschieden.

Natürlich ist die Realisierung mit zwei Farbkanälen unabhängig von der Verwendung der Zoomoptik 29. Die Kombination hat jedoch den Vorteil, daß eine Zoomoptik 27, die in beiden Farbkanälen jeweils eigenständig vorgesehen werden müßte und damit doppelt vorhanden wäre, nur einmal erforderlich ist. Selbstverständlich kann jedoch die Zoomoptik 27 auch in der Bauweise gemäß Fig. 1 zum Einsatz kommen und das LSM 1 der Fig. 6 kann auch ohne Zoomoptik 29 verwirklicht werden.

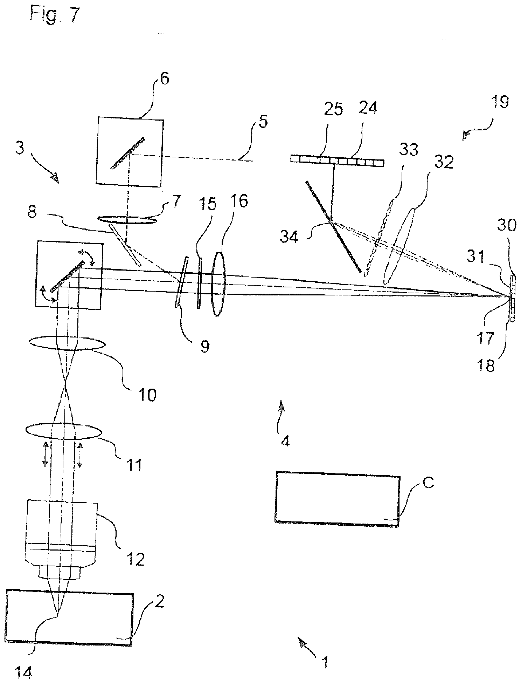

Fig. 7 zeigt eine Abwandlung des LSM 1 der Fig. 1 hinsichtlich der Detektoreinrichtung 19.

Die Detektoreinrichtung 19 weist nun einen Facettenspiegel 30 auf, der einzelne Facetten 31 trägt. Die Facetten 31 entsprechen hinsichtlich der Auflösung des Bildes 17 den Enden der Lichtleitfasern 21 am Lichtleitfaserbündeleingang 22. Die einzelnen Facetten 31 unterscheiden sich hinsichtlich ihrer Neigung zur optischen Achse des Strahlungseinfalls. Zusammen mit einer Linse 32 und einem Minilinsenarray 33 sowie einem nur der Strahlfaltung dienenden Umlenkspiegel 34 bildet jede Facette 31 einen Flächenabschnitt des Einzelbildes 17 auf ein Pixel 25 eines Detektorarrays 24 ab. Je nach Orientierung der Facetten 31 kann das Detektorarray 24 dabei bevorzugt ein 2D-Array sein, aber auch eine Detektorzeile ist möglich.

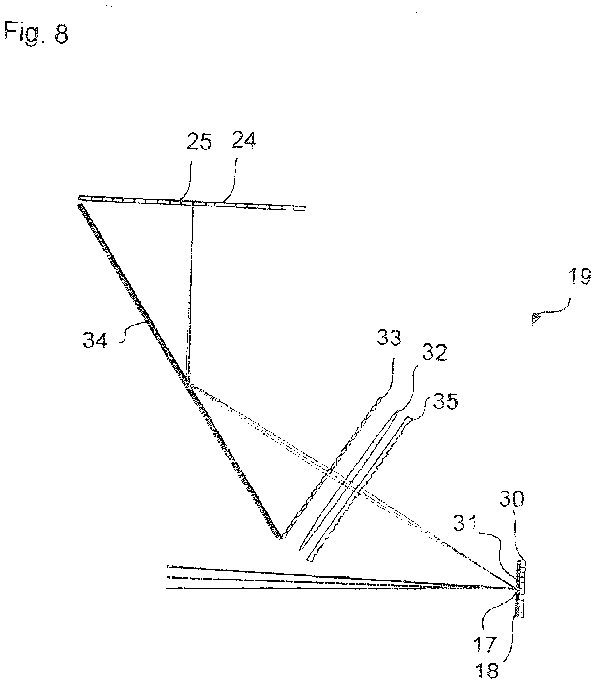

Fig. 8 zeigt eine Weiterbildung der Detektoreinrichtung 19 der Fig. 7, in welcher der Linse 32 noch ein refraktives Element 35 vorgeordnet ist, das die Strahlung besonders gut auf eine Detektorzeile verteilt.

Das Detektorarray 24 kann, wie bereits erwähnt, hinsichtlich seiner Geometrie ohne weitere Einschränkungen gewählt werden. Selbstverständlich muß das Umverteilungselement in der Detektoreinrichtung 19 dann auf das entsprechende Detektorarray angepaßt werden. Die einzelnen Pixel, mit denen das Bild 17 aufgelöst wird, sind letztlich hinsichtlich ihrer Größe nicht mehr durch das Detektorarray 24 vorgegeben, sondern durch das Element, welches die Umverteilung der Strahlung aus der Detektionsebene 18 bewirkt. Bei einer Airy-Scheibe ergibt sich der Durchmesser der Scheibe bei einer beugungsbegrenzten Abbildung gemäß der Formel 1,22 λ/NA, wobei λ die mittlere Wellenlänge der abgebildeten Strahlung und NA die numerische Apertur des Objektivs 13 ist. Die Halbwertsbreite ist dann 0,15 λ/NA. Um die Hochauflösung zu erreichen, genügt es, die Ortsauflösung bei der Detektion doppelt so groß wie die Halbwertsbreite zu gestalten, d. h. die Halbwertsbreite zweimal abzutasten. Ein Facettenelement 31 bzw. ein Ende einer Lichtleitfaser 21 am Lichtleitfaserbündeleingang 22 darf somit maximal halb so groß wie die Halbwertsbreite des beugungsbegrenzten Einzelbildes sein. Dies gilt natürlich unter Berücksichtigung des Abbildungsmaßstabes, den die Optik nach dem Objektiv 13 bewirkt. Im einfachsten Fall würde also ein 4x4-Array von Pixeln in der Detektionsebene 18 pro Halbwertsbreite mehr als genügen.
Die Zoomoptik, welche anhand der Figuren 5 und 6 erläutert wurde, erlaubt neben einer Anpassung dergestalt, daß die Beugungsverteilung des beugungsbegrenzten Bildes 17 des Spots 14 die Eingangsfläche der Detektoreinrichtung 19 optimal ausfüllt, auch noch eine weitere Betriebsart, wenn nämlich mehr als eine Airy-Scheibe in die Detektionsebene 18 abgebildet wird. Bei einer Messung, bei der mehr als eine Airy-Scheibe auf die Detektoreinrichtung 19 abgebildet wird, wird Licht aus weiteren Tiefenebenen der Probe 2 an den äußeren Pixeln der Detektoreinrichtung 19 detektiert. Im Zuge der Verarbeitung des Bildes erhält man dabei zusätzliche Signalstärke, ohne daß die Tiefenauflösung des LSM 1 beeinträchtigt wäre. Die Zoomoptik 27 bzw. 29 erlaubt es somit, einen Kompromiß zwischen Signal-/Rauschverhältnis des Bildes und Tiefenauflösung einzustellen.

Beim Aufbau eines LSM entsprechend der oben beschriebenen Ausführungsformen wird eine "verschmolzene oder geklebte Multi-Mode-Faser-Anordnung für die Sub-Airy ortsaufgelöste Detektion in der Mikroskopie" verwendet.

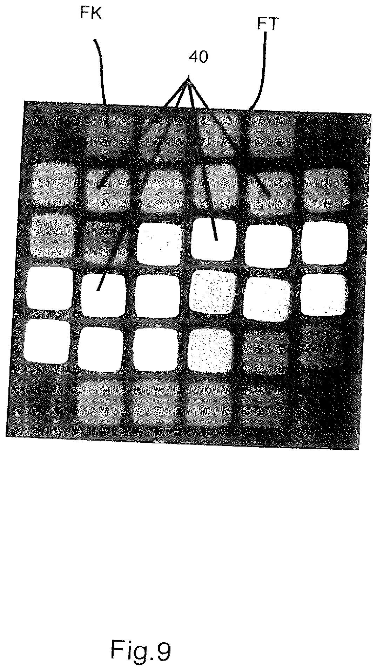

Diese Anordnung hat zwei in Fig. 9 dargestellte Nachteile:
Es ist eine Verteilung von Fasereintrittsflächen 40 dargestellt.
Erstens tritt ein einen Effizienzverlust wegen des geometrischen Füllfaktors zwischen einer effektiven Fläche FK (Faserkern) und einen Totbereich FT um den Faserkern herum (Fasercladding) auf.
Zweitens gibt es mechanische Ungenauigkeiten bezüglich der exakten Positionierung der jeweiligen Faserkerne im Faserarray, so dass in der Realität keine ideale Gleichverteilung bzw. Ausrichtung der Faserkerne existiert.

Ziel der Erfindung ist es, eine Anordnung anzugeben, die beide Probleme minimiert. Die Erfindung wird durch die Merkmale der unabhängigen Ansprüche charakterisiert. Bevorzugte Weiterbildungen sind Gegenstand der abhängigen Ansprüche.

Die Erfindung betrifft die Anordnung eines zweidimensionalen (nicht notwendigerweise regelmäßigen) Arrays von optischen Elementen vor einem Faserarray zur Minimierung der Totbereiche der Fasern und / oder zur Änderung der Geometrie der Messbereiche der einzelnen Fasern.

Dieses Array kann geometrisch sehr viel genauer als die Position der einzelnen Fasern kontrolliert werden kann, so dass eine höhere Präzision der Messung mit dem SR-LSM möglich wird.

Die numerische Apertur (NA) des einfallenden Lichtes sollte hierbei deutlich kleiner als die NA der Faser sein, da sonst durch die Umlenkung des Lichtes aus den Totbereichen heraus zu große Winkel der auf die Faser einfallenden Lichtstrahlen entstehen können.
- Das Array besteht aus Linsen (Glas oder Plastik).
- Eine Herstellung des Arrays kann mittels lithographischer Verfahren (Mikrooptik) erfolgen.
- Es kann durch Änderung der Geometrie der verschiedenen Bereiche die geometrische Form oder Größe der Empfangsbereiche der verschiedenen Fasern individuell gestaltet werden Der Bereich, auf den hin das Licht geleitet wird, sollte kleiner als die empfindliche Fläche der Faser sein. Dadurch können ungewünschte laterale Verschiebungen einzelner Fasern (Fertigungstoleranzen) des Faserbündels zumindest teilweise ausgeglichen werden.

Im Folgenden wird die Erfindung anhand der Abbildungen 110-14 näher erläutert.

Die Bezugszeichen in Fig.9 und 11-14 bedeuten:
FK: Faserkern
FT: Totbereich
40: Eintrittsfläche
41: Träger
43: Einzellinse
44: Linsenarray
45: Aufsatz
46: Mittenbereich
47: abgeschrägter Bereich
48: Zwischenbildebene
491,2,3:Lichtstrahlenbündel
50: Linsenarray
51: Innere Geometrie
52: Äußere Geometrie
E: Lichteintrittsflächen

Ein erfindungsgemäßes Array von lichtbeeinflussenden Elementen ist erfindungsgemäss so dimensioniert dass Eintrittslicht in einen Bereich konzentriert oder fokussiert ist, der vorzugsweise kleiner als der optisch aktive Kern der Faser ist, wodurch Positionierfehler und Größenunterschiede der Einzelfasen ausgeglichen werden können.

Die numerische Apertur (NA) des auf das Faserarray fallenden Lichtes ist viel kleiner als die NA der einzelnen Fasern des Arrays. Daher kann der Winkel des einfallenden Lichtes vergrößert werden, ohne dass wegen der dann größer werdenden NA das Licht nicht mehr von der Faser aufgenommen werden könnte.

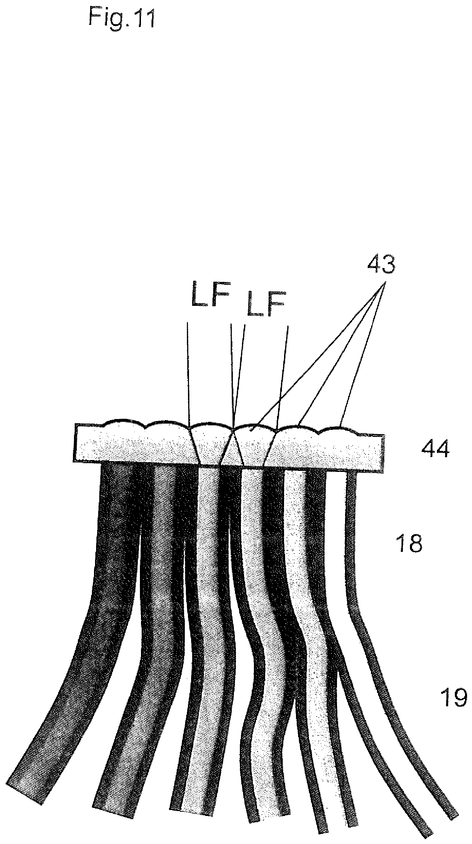

In Fig. 11 ist der Fasern ein aufgesetzter Glasblock mit einem Linsenarray 44, bestehend aus konkaven Einzellinsen 43, vorgeordnet wobei jede Einzellinse den gesamten Lichteinfall LF entlang ihrer Lichtöffnungsfläche in eine Lichtleitereintrittsfläche 40 fokussiert.

Idealerweise wird dabei das Array 44 gleich so dimensioniert, dass der Bereich, auf den das Licht konzentriert wird, wiederum kleiner als der aktive Kern einer Faser ist, um die möglichen Positionierfehler der einzelnen Fasern gleich mit auszugleichen. Hierdurch geht keine Lichtenergie verloren und es wird das gesamte Licht auf die Fasereintrittsflächen transportiert.

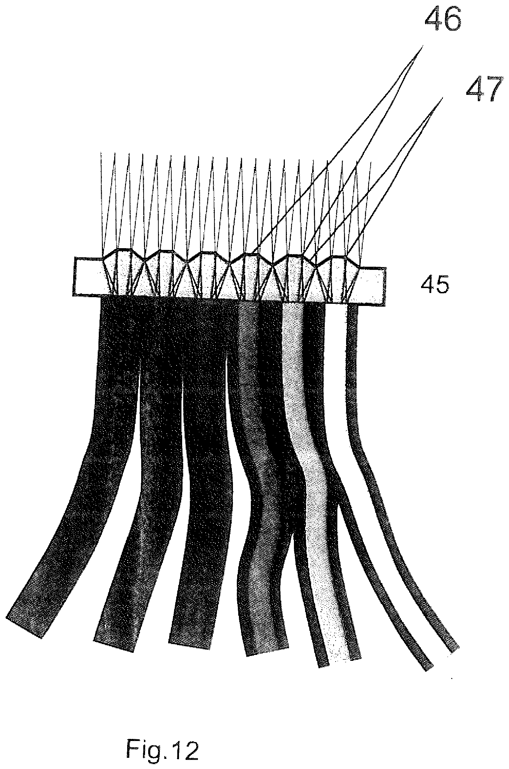

In Abb. 12 sind kantige Lichteintrittsflächen 46,47 eines Aufsatzes 45 vorgesehen so dass jeweils in einem Mittenbereich 46 das Licht unabgelenkt in Richtung der Faser gelangt und in abgeschrägten Bereichen 57 das Licht in Richtung der jeweiligen Fasereintrittsfläche gebrochen wird. Auch hier gelangt vorteilhaft fast der gesamte Lichtquerschnitt pro Element 46,47 in das Innere der Faser.

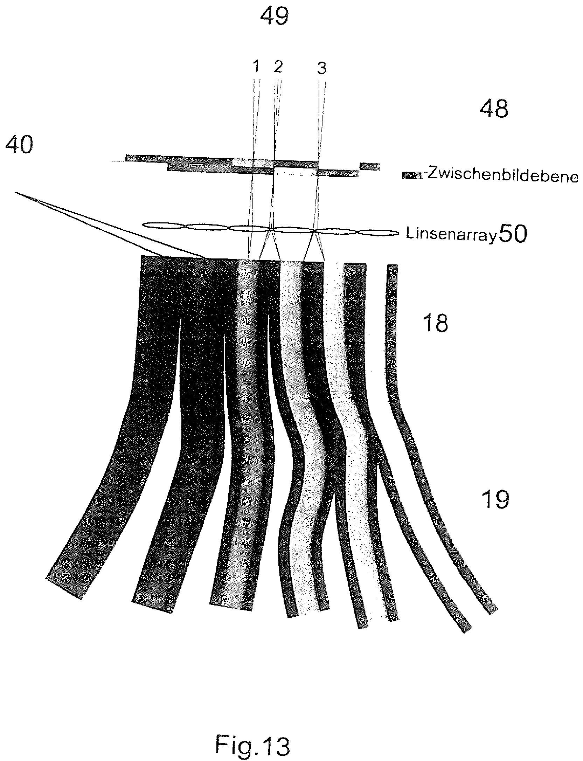

Eine weitere Möglichkeit ist es, jede einzelne, individuelle Faser (inkl. des zugehörigen Totbereichs) vergrößert in eine Zwischenbildebene 48 die zur Probenebene optisch konjugiert ist, abzubilden, und zwar so, dass sich die jeweiligen sensitiven Bereiche an den Rändern jeweils berühren. Dies ist in Abb.13 dargestellt, in der sich ein Linsenarray 50, bestehend aus beispielsweise holografisch hergestellten Einzellinsen vor den Lichtleitereingängen 40 befindet und die Ebene der Lichtleitereingänge vergrößert in die Zwischenbildebene 48 abbildet. Dargestellt sind Einzelstrahlenbündel 49.1,2,3 in einer Zwischenbildebene 48. Das Bündel 49,1 durchtritt die Zylinderlinse mittig ohne nennenswerte Ablenkung während die Bündel 49,2 und 49,3 in Randbereichen der jeweiligen Zylinderlinsen jeweils in Richtung der jeweiligen Faserbündel umgelenkt werden.

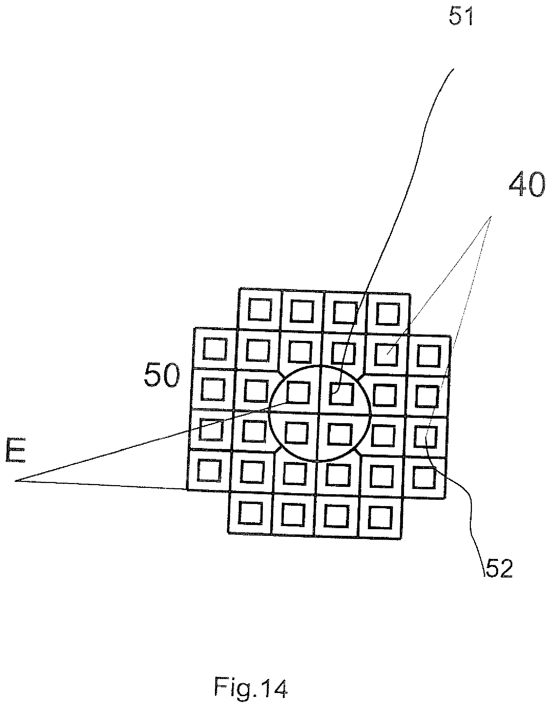

Ein wichtiger Aspekt der Erfindung ist auch, dass (in beschränktem Maße) relativ einfach von der quadratischen Anordnung abweichende Geometrien der Zuordnung der empfindlichen Fläche zu den einzelnen Fasern vorgenommen werden können, wie es beispielsweise in Abbildung 14 angedeutet ist.

Abbildung 14 zeigt das Prinzip einer von der regelmäßigen quadratischen Anordnung abweichenden Zuordnung der Bereiche.

Durch die lithographischen Herstellungsverfahren lassen sich hier im Prinzip beliebige Bereichsgrenzen formen. Limitierend ist hier lediglich, dass die Ablenkwinkel von den Bereichsgrenzen hin zum Kern der Glasfaser nicht größer als der Akzeptanzwinkel der Glasfaser werden dürfen.

Schematisch dargestellt sind unterschiedlich geformte Lichteintrittsflächen E eines Optikaufsatzes OA vor dem Faserbündel mit den Eintrittsflächen 40.

Jedem Bereich des Aufsatzes sind eine - oder mehrere Lichteintrittsöffnungen, hier jeweils eine, zugeordnet.

Hier handelt es sich um rechteckige oder quadratische oder sechseckige Eintrittsflächen,
wobei in einer inneren runden Geometrie 51 in Bezug auf eine äußere rechteckige Geometrie 52 unterschiedlich große und unterschiedlich geformte Lichteintrittsflächen das Licht jeweils zu den einzelnen Fasern 40 geleiten.

Beispielsweise kann durch den inneren Bereich 51 hier ein rundes Pinhole simuliert werden, dessen Lichtfasern separat zu den Fasern des Außenbereichs 52 durch die Detektorelemente ausgelesen werden.

Auch mehrere konzentrische Kreise von Einzelelemente sind hier vorstellbar die separat durch die Detektorelemente ausgelesen werden.

## Patentansprüche

1. Mikroskop zur hochauflösenden Scanning-Mikroskopie einer Probe (2), mit
- einer Beleuchtungseinrichtung (3) zum Beleuchten der Probe (2),
- einer Abbildungseinrichtung (4), umfassend einen Scanner zum Scannen mindestens eines Punkt- oder Linien-Spots (14) über die Probe (2), zum Abbilden des Punkt- oder Linien-Spots (14) in ein beugungsbegrenztes, ruhendes Einzelbild (17) unter einem Abbildungsmaßstab in eine Detektionsebene (18),
- einer Detektoreinrichtung (19) zum Erfassen des Einzelbildes (17) in der Detektionsebene (18) für verschiedene Scanpositionen mit einer Ortauflösung, welche unter Berücksichtigung des Abbildungsmaßstabes in mindestens einer Ausdehnung/ Dimension mindestens doppelt so groß ist wie eine Halbwertsbreite des beugungsbegrenzten Einzelbildes (17),
- einer Auswerteeinrichtung (C) zum Auswerten einer Beugungsstruktur des Einzelbildes (17) für die Scanpositionen aus Daten der Detektoreinrichtung (19) und zum Erzeugen eines Bildes der Probe (17), das eine Auflösung aufweist, die über die Beugungsgrenze gesteigert ist, wobei
- die Detektoreinrichtung (19) aufweist:
- ein Detektorarray (24), das Pixel (25) aufweist und größer ist als das Einzelbild (17), **gekennzeichnet durch**
- ein nicht-abbildendes Umverteilungselement (20-21; 30-34; 30-35), das dem Detektorarray (24) vorgeordnet ist und die Strahlung aus der Detektionsebene (18) nicht-abbildend auf die Pixel (25) des Detektorarrays (24) verteilt, wobei das Umverteilungselement ein Bündel (20) aus Lichtleitfasern (21) umfaßt, welches einen in der Detektionsebene (18) angeordneten Eingang (22) und einen Ausgang (23) aufweist, an dem die Lichtleitfasern (21) in einer geometrischen Anordnung, welche sich von der des Eingangs (22) unterscheidet, an den Pixeln (25) des Detektorarrays (24) enden, und
- dem Bündel aus Lichtleitfasern in Lichtrichtung vorgeordnete, die Lichtrichtung beeinflussende Elemente, die den Lichteintrittsöffnungen der Einzellichtfasern Detektionslicht zuordnen, wobei die die Lichtrichtung beeinflussenden Elemente Linsen eines Linsenarrays sind, die zumindest einem Teil der Einzelfasern optisch zugeordnet sind.

2. Mikroskop nach Anspruch 1, **dadurch gekennzeichnet, dass** das Bündel (20) aus Multi-Mode Lichtleitfasern besteht.

3. Mikroskop nach Anspruch 1 oder 2, **dadurch gekennzeichnet, daß** die Lichtleitfasern (21) so vom Eingang (22) zum Ausgang (23) laufen, daß am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

4. Mikroskop nach einem der obigen Ansprüche, **dadurch gekennzeichnet, daß** die Abbildungseinrichtung (4) eine der Detektionsebene (18) in Abbildungsrichtung vorgeordnete Zoomoptik (27) zur Anpassung der Größe des Einzelbildes (17) an die der Detektoreinrichtung (19) aufweist.

5. Mikroskop nach Anspruch 4, **dadurch gekennzeichnet, daß** die Beleuchtungseinrichtung (3) und die Abbildungseinrichtung (4) sich eine Scaneinrichtung (10) teilen, so daß die Beleuchtungseinrichtung (3) die Probe (2) mit einem beugungsbegrenzten Punkt- oder Linien-Spot beleuchtet, der mit dem von der Abbildungseinrichtung abgebildeten Spot (14) zusammenfällt, wobei die Zoomoptik (27) so angeordnet ist, daß sie auch Bestandteil der Beleuchtungseinrichtung (3) ist.

6. Mikroskop nach einem der obigen Ansprüche, **dadurch gekennzeichnet, daß** das Detektorarray (24) eine Detektorzeile, bevorzugt eine APD- oder PMT-Zeile ist.

7. Verfahren zur hochauflösenden Scanning-Mikroskopie einer Probe (2), bei dem
- die Probe (2) beleuchtet wird,
- mindestens ein scannend über die Probe (2) geführter Punkt- oder Linien-Spot (14) in ein Einzelbild (17) abgebildet wird, wobei der Spot (14) unter einem Abbildungsmaßstab beugungsbegrenzt in das Einzelbild (17) abgebildet wird und das Einzelbild (17) ruhend in einer Detektionsebene (18) liegt,
- für verschiedene Scanpositionen das Einzelbild (17) mit einer Ortauflösung erfaßt wird, welche unter Berücksichtigung des Abbildungsmaßstabes mindestens doppelt so groß ist wie eine Halbwertsbreite des beugungsbegrenzten Einzelbildes (17), so daß eine Beugungsstruktur des Einzelbildes (17) erfaßt wird,
- für jede Scanposition die Beugungsstruktur des Einzelbildes (17) ausgewertet wird und ein Bild der Probe (2) erzeugt wird, das eine Auflösung aufweist, die über die Beugungsgrenze gesteigert ist, wobei
- ein Detektorarray (24) bereitgestellt wird, das Pixel (25) aufweist und größer ist als das Einzelbild (17), **dadurch gekennzeichnet, dass**
- Strahlung des Einzelbildes aus der Detektionsebene (18) nicht-abbildend auf die Pixel (25) des Detektorarrays (24) umverteilt wird, wobei die Strahlung des Einzelbildes (17) mittels eines Bündels (20) aus Lichtleitfasern (21), vorzugsweise aus Multi-Mode Lichtleitfasern, umverteilt wird, welches einen in der Detektionsebene (18) angeordneten Eingang (22) und einen Ausgang (23) aufweist, an dem die Lichtleitfasern (21) in einer geometrischen Anordnung, welche sich von der des Eingangs (22) unterscheidet, an den Pixeln (25) des Detektorarrays (24) enden, und
- dem Bündel aus Lichtleitfasern in Lichtrichtung vorgeordnete, die Lichtrichtung beeinflussende Elemente, die den Lichteintrittsöffnungen der Einzellichtfasern Detektionslicht zuordnen, wobei die die Lichtrichtung beeinflussenden Elemente Linsen eines Linsenarrays sind, die zumindest einem Teil der Einzelfasern optisch zugeordnet sind.

8. Verfahren nach Anspruch 7, **dadurch gekennzeichnet, daß** das Bündel (20) aus Lichtleitfasern (21) aus Multi-Mode Lichtleitfasern besteht.

9. Verfahren nach Anspruch 7 oder 8, **dadurch gekennzeichnet, daß** die Lichtleitfasern (21) so vom Eingang (22) zum Ausgang (23) geführt werden, daß am Ausgang (23) benachbarte Lichtleitfasern (21) auch am Eingang (22) benachbart sind, um ein
strahlungsintensitätsabhängiges Übersprechen nebeneinanderliegender Pixel (25) zu minimieren.

10. Verfahren nach Anspruch 7 oder 8, **dadurch gekennzeichnet, daß** das Bündel (20) aus Lichtleitfasern (21) und das Detektorarray (24) kalibriert werden, indem jede Lichtleitfaser (21) einzeln mit Strahlung beaufschlagt wird, Störsignal in Pixeln (25), die am Ausgang (23) benachbarten Lichtleitfasern (21) zugeordnet sind, erfaßt werden und eine Kalibriermatrix aufgestellt wird, mit der bei Mikroskopie der Probe (2) ein strahlungsintensitätsabhängiges Übersprechen nebeneinanderliegender Pixel (25) korrigiert wird.

11. Verfahren nach einem der obigen Verfahrensansprüche, **dadurch gekennzeichnet, daß** als Detektorarray (24) eine Detektorzeile, bevorzugt eine APD- oder PMT-Zeile verwendet wird.

12. Verfahren nach einem der obigen Verfahrensansprüche, **dadurch gekennzeichnet, daß** eine Bewegungsrichtung des Scannens des Punkt- oder Linien-Spots (14) ermittelt wird, indem Signale einzelner Pixel (25) des Detektorarrays (24) mittels Kreuzkorrelation ausgewertet werden.

13. Verfahren nach einem der obigen Verfahrensansprüche, **dadurch gekennzeichnet, daß** Veränderungen in der Probe (2) erfaßt werden, indem bei in der Probe (2) ruhendem Punkt- oder Linien-Spot (14) eine zeitliche Veränderung des beugungsbegrenzten Einzelbildes (17) ermittelt und ausgewertet wird.

14. Mikroskop nach einen der Ansprüche 1 bis 6,
wobei das Linsenarray zur Abbildung der Lichteintrittsflächen in eine Zwischenbildebene dient, die mit der Probenebene optisch konjugiert ist, und zwischen einer Zwischenbildebene und der Ebene der Lichteintrittsflächen angeordnet ist.

15. Verfahren nach einen der Ansprüche 7 bis 13,
wobei das Linsenarray zur Abbildung der Lichteintrittsflächen in eine Zwischenbildebene dient, die mit der Probenebene optisch konjugiert ist, und zwischen einer Zwischenbildebene und der Ebene der Lichteintrittsflächen angeordnet ist.

16. Mikroskop nach einem der Ansprüche 1 bis 6 oder 14, wobei der Scanner ein Scanspiegel oder ein beweglicher Probentisch ist.

## Claims

1. Microscope for examining a sample (2) by super-resolution scanning microscopy, comprising
- an illumination device (3) for illuminating the sample (2),
- an imaging device (4) comprising a scanner for scanning at least one point or line spot (14) over the sample (2), for imaging the point or line spot (14) into a stationary diffraction-limited individual image (17) in a detection plane (18) with an imaging scale,
- a detector device (19) for capturing the individual image (17) in the detection plane (18) for different scanning positions with a spatial resolution which, taking account of the imaging scale along at least one extent/in at least one dimension, is at least twice as large as a full width at half maximum of the diffraction-limited individual image (17),
- an evaluation device (C) for evaluating a diffraction structure of the individual image (17) for the scanning positions from data of the detector device (19) and for generating an image of the sample (17) with a resolution that has been increased beyond the diffraction limit, wherein
- the detector device (19) comprises:
- a detector array (24), which has pixels (25) and is larger than the individual image (17),
**characterized by**
- a non-imaging redistribution element (20-21; 30-34; 30-35), which is disposed upstream of the detector array (24) and which distributes the radiation from the detection plane (18) in non-imaging fashion among the pixels (25) of the detector array (24), wherein the redistribution element comprises a bundle (20) of optical fibres (21) which has an input (22) arranged in the detection plane (18) and an output (23) at which the optical fibres (21) end at the pixels (25) of the detector array (24) in a geometric arrangement that differs from that of the input (22), and
- elements which are disposed upstream of the bundle of optical fibres in the light direction, which influence the light direction and which assign detection light to the light entry openings of the individual light fibres, wherein the elements which influence the light direction are lenses of a lens array, which are optically assigned to at least some of the individual fibres.

2. Microscope according to Claim 1, **characterized in that** the bundle (20) consists of multi-mode optical fibres.

3. Microscope according to Claim 1 or 2, **characterized in that** the optical fibres (21) extend from the input (22) to the output (23) in such a way that optical fibres (21) that are adjacent at the output (23) are also adjacent at the input (22) in order to minimize a radiation intensity-dependent crosstalk of neighbouring pixels (25).

4. Microscope according to any one of the preceding claims, **characterized in that** the imaging device (4) comprises a zoom optical unit (27) for adjusting the size of the individual image (17) to that of the detector device (19), said zoom optical unit being disposed upstream of the detection plane (18) in the imaging direction.

5. Microscope according to Claim 4, **characterized in that** the illumination device (3) and the imaging device (4) share a scanning device (10) such that the illumination device (3) illuminates the sample (2) with a diffraction-limited point or line spot, which coincides with the spot (14) imaged by the imaging device, wherein the zoom optical unit (27) is arranged such that it too is a constituent part of the illumination device (3).

6. Microscope according to any one of the preceding claims, **characterized in that** the detector array (24) is a detector line, preferably an APD or PMT line.

7. Method for examining a sample (2) by super-resolution scanning microscopy, wherein
- the sample (2) is illuminated,
- at least one point or line spot (14) guided over the sample (2) in scanning fashion is imaged at an individual image (17), wherein the spot (14) is imaged into the individual image (17) in diffraction-limited fashion with an imaging scale and the individual image (17) is located in a detection plane (18) in stationary fashion,
- the individual image (17) is captured for different scanning positions with a spatial resolution which, taking account of the imaging scale, is at least twice as large as a full width at half maximum of the diffraction-limited individual image (17) such that a diffraction structure of the individual image (17) is captured,
- the diffraction structure of the individual image (17) is evaluated for each scanning position and an image of the sample (2) is generated, said image having a resolution increased beyond the diffraction limit,
wherein
- a detector array (24) is provided, the latter having pixels (25) and being larger than the individual image (17), **characterized in that**
- radiation of the individual image from the detection plane (18) is redistributed in non-imaging fashion among the pixels (25) of the detector array (24), wherein the radiation of the individual image (17) is redistributed by means of a bundle (20) of optical fibres (21), preferably multimode optical fibres, which has an input (22) arranged in the detection plane (18) and an output (23) at which the optical fibres (21) end at the pixels (25) of the detector array (24) in a geometric arrangement that differs from that of the input (22), and
- elements which are disposed upstream of the bundle of optical fibres in the light direction, which influence the light direction and which assign detection light to the light entry openings of the individual light fibres, wherein the elements which influence the light direction are lenses of a lens array, which are optically assigned to at least some of the individual fibres.

8. Method according to Claim 7, **characterized in that** the bundle (20) of optical fibres (21) consists of multimode optical fibres.

9. Method according to Claim 7 or 8, **characterized in that** the optical fibres (21) are guided from the input (22) to the output (23) in such a way that optical fibres (21) that are adjacent at the output (23) are also adjacent at the input (22) in order to minimize a radiation intensity-dependent crosstalk of neighbouring pixels (25).

10. Method according to Claim 7 or 8, **characterized in that** the bundle (20) of optical fibres (21) and the detector array (24) are calibrated by virtue of each optical fibre (21) being impinged with radiation on an individual basis, disturbance signals in pixels (25) which are assigned to the output (23) of adjacent optical fibres (21) being captured and a calibration matrix being set up, by means of which a radiation intensity-dependent crosstalk of neighbouring pixels (25) is corrected when the sample (2) is examined by microscopy.

11. Method according to any one of the preceding method claims, **characterized in that** a detector line, preferably an APD or PMT line, is used as a detector array (24).

12. Method according to any one of the preceding method claims, **characterized in that** a movement direction of the scanning of the point or line spot (14) is ascertained by virtue of signals of individual pixels (25) of the detector array (24) being evaluated by means of cross-correlation.

13. Method according to any one of the preceding method claims, **characterized in that** changes in the sample (2) are captured by virtue of a time variation of the diffraction-limited individual image (17) in the case of a point or line spot (14) at rest in the sample (2) being ascertained and evaluated.

14. Microscope according to any one of Claims 1 to 6, wherein the lens array serves to image the light entry faces into an intermediate image plane that is optically conjugate to the sample plane, and is arranged between an intermediate image plane and the plane of the light entry faces.

15. Method according to any one of Claims 7 to 13, wherein the lens array serves to image the light entry faces into an intermediate image plane that is optically conjugate to the sample plane, and is arranged between an intermediate image plane and the plane of the light entry faces.

16. Microscope according to any one of Claims 1 to 6 or 14, wherein the scanner is a scanning mirror or a movable sample stage.

## Revendications

1. Microscope pour la microscopie par balayage à haute résolution d'un échantillon (2), équipé
- d'un dispositif d'éclairage (3) pour éclairer l'échantillon (2),
- d'un dispositif de formation d'image (4) comprenant un dispositif de balayage pour balayer au moins un point ponctuel ou linéaire (14) sur l'échantillon (2) et pour former l'image du point ponctuel ou linéaire (14) en une image individuelle (17) au repos limitée par la diffraction à une échelle de formation d'image dans un plan de détection (18),
- d'un dispositif de détection (19) pour détecter l'image individuelle (17) dans le plan de détection (18) pour différentes positions de balayage avec une résolution spatiale qui est au moins deux fois plus grande, en tenant compte de l'échelle de formation d'image, dans au moins une extension/dimension, qu'une demi-largeur de l'image individuelle (17) limitée par la diffraction,
- d'un dispositif d'évaluation (C) pour évaluer une structure de diffraction de l'image individuelle (17) pour les positions de balayage à partir de données du dispositif de détection (19) et pour générer une image de l'échantillon (17) présentant une résolution supérieure à la limite de diffraction, dans lequel
- le dispositif de détection (19) comporte :
- un groupement de détecteurs (24) qui comporte des pixels (25) et qui est plus grand que l'image individuelle (17),
**caractérisé par**
- un élément de répartition non imageur (20-21 ; 30-34 ; 30-35), qui est disposé en amont du groupement de détecteurs (24) et qui répartit sans formation d'image le rayonnement provenant du plan de détection (18) sur les pixels (25) du groupement de détecteurs (24), dans lequel l'élément de répartition comprend un faisceau (20) de fibres optiques (21) qui comporte une entrée (22) disposée dans le plan de détection (18) et une sortie (23) à laquelle les fibres optiques (21) aboutissent selon un agencement géométrique différent de celui de l'entrée (22) au niveau des pixels (25) du groupement de détecteurs (24), et
- des éléments influençant la direction de la lumière, qui sont disposés en amont du faisceau de fibres optiques dans la direction de la lumière et qui associent la lumière de détection aux ouvertures d'entrée de lumière des fibres optiques individuelles, dans lequel les éléments influençant la direction de la lumière sont des lentilles d'un groupement de lentilles qui sont optiquement associées à au moins une partie des fibres individuelles.

2. Microscope selon la revendication 1, **caractérisé en ce que** le faisceau (20) est constitué de fibres optiques multimodes.

3. Microscope selon la revendication 1 ou 2, **caractérisé en ce que** les fibres optiques (21) s'étendent de l'entrée (22) à la sortie (23) de telle sorte que des fibres optiques (21) adjacentes à la sortie (23) sont également adjacentes à l'entrée (22), afin de minimiser une diaphonie dépendant de l'intensité de rayonnement de pixels adjacents (25).

4. Microscope selon l'une quelconque des revendications précédentes, **caractérisé en ce que** le dispositif de formation d'image (4) comporte une optique de zoom (27) disposée en amont du plan de détection (18) dans la direction de formation d'image pour adapter la taille de l'image individuelle (17) à celle du dispositif de détection (19).

5. Microscope selon la revendication 4, **caractérisé en ce que** le dispositif d'éclairage (3) et le dispositif de formation d'image (4) partagent un dispositif de balayage (10), de sorte que le dispositif d'éclairage (3) éclaire l'échantillon (2) avec un point ponctuel ou linéaire limité par la diffraction et coïncidant avec le point (14) dont l'image est formée par le dispositif de formation d'image, dans lequel l'optique de zoom (27) est disposée de manière à faire également partie du dispositif d'éclairage (3).

6. Microscope selon l'une quelconque des revendications précédentes, **caractérisé en ce que** le groupement de détecteurs (24) est un réseau de détecteurs, de préférence un réseau APD ou PMT.

7. Procédé de microscopie par balayage à haute résolution d'un échantillon (2), dans lequel
- l'échantillon (2) est éclairé,
- au moins un point ponctuel ou linéaire (14) balayé sur l'échantillon (2) est soumis à une formation d'image en une image individuelle (17), dans lequel le point (14) est soumis à une formation d'image en l'image individuelle (17) de manière limitée par la diffraction à une échelle de formation d'image et l'image individuelle (17) est au repos dans un plan de détection (18)
- pour différentes positions de balayage, l'image individuelle (17) est détectée avec une résolution spatiale qui est au moins deux fois plus grande, en tenant compte de l'échelle de formation d'image, qu'une demi-largeur de l'image individuelle (17) limitée par la diffraction, de sorte qu'une structure de diffraction de l'image individuelle (17) est détectée,
- pour chaque position de balayage, la structure de diffraction de l'image individuelle (17) est évaluée et une image de l'échantillon (2) présentant une résolution supérieure à la limite de diffraction est générée, dans lequel
- il est prévu un groupement de détecteurs (24) qui comporte des pixels (25) et qui est plus grand que l'image individuelle (17), **caractérisé en ce que**
- le rayonnement de l'image individuelle provenant du plan de détection (18) est réparti sans formation d'image sur les pixels (25) du groupement de détecteurs (24), dans lequel le rayonnement de l'image individuelle (17) est réparti au moyen d'un faisceau (20) de fibres optiques (21), de préférence de fibres optiques multimodes, qui comporte une entrée (22) disposée dans le plan de détection (18) et une sortie (23) à laquelle les fibres optiques (21) aboutissent selon un agencement géométrique différent de celui de l'entrée (22) au niveau des pixels (25) du groupement de détecteurs (24), et
- des éléments influençant la direction de la lumière, qui sont disposés en amont du faisceau de fibres optiques dans la direction de la lumière et qui associent la lumière de détection aux ouvertures d'entrée de la lumière des fibres optiques individuelles, dans lequel les éléments influençant la direction de la lumière sont des lentilles d'un groupement de lentilles qui sont optiquement associées à au moins une partie des fibres individuelles.

8. Procédé selon la revendication 7, **caractérisé en ce que** le faisceau (20) de fibres optiques (21) est constitué de fibres optiques multimodes.

9. Procédé selon la revendication 7 ou 8, **caractérisé en ce que** les fibres optiques (21) sont guidées de l'entrée (22) vers la sortie (23) de telle sorte que des fibres optiques (21) adjacentes à la sortie (23) sont également adjacentes à l'entrée (22), afin de minimiser une diaphonie dépendant de l'intensité de rayonnement de pixels adjacents (25).

10. Procédé selon la revendication 7 ou 8, **caractérisé en ce que** le faisceau (20) de fibres optiques (21) et le groupement de détecteurs (24) sont étalonnés en appliquant individuellement un rayonnement à chaque fibre optique (21), en détectant un signal de brouillage dans des pixels (25) associés à des fibres optiques adjacentes (21) à la sortie (23), et en établissant une matrice d'étalonnage pour corriger la diaphonie dépendant de l'intensité du rayonnement de pixels adjacents (25) lors de la microscopie de l'échantillon (2).

11. Procédé selon l'une quelconque des revendications de procédé précédentes, **caractérisé en ce qu'**un réseau de détecteurs, de préférence un réseau APD ou PMT, est utilisé en tant que groupement de détecteurs.

12. Procédé selon l'une quelconque des revendications de procédé précédentes, **caractérisé en ce qu'**une direction de mouvement du balayage du point ponctuel ou linéaire (14) est déterminée en évaluant des signaux de pixels individuels (25) du groupement de détecteurs (24) au moyen d'une intercorrélation.

13. Procédé selon l'une quelconque des revendications de procédé précédentes, **caractérisé en ce que** des variations de l'échantillon (2) sont détectées en déterminant et en évaluant une variation temporelle de l'image individuelle (17) limitée par la diffraction lorsque le point ponctuel ou linéaire (14) est au repos dans l'échantillon (2).

14. Microscope selon l'une quelconque des revendications 1 à 6,
dans lequel le groupement de lentilles est destiné à former l'image des surfaces d'entrée de lumière dans un plan image intermédiaire qui est optiquement conjugué avec le plan de l'échantillon, et est disposé entre un plan image intermédiaire et le plan des surfaces d'entrée de lumière.

15. Procédé selon l'une quelconque des revendications 7 à 13,
dans lequel le groupement de lentilles est destiné à former l'image des surfaces d'entrée de lumière dans un plan image intermédiaire optiquement conjugué avec le plan de l'échantillon, et est disposé entre un plan image intermédiaire et le plan des surfaces d'entrée de lumière.

16. Microscope selon l'une quelconque des revendications 1 à 6 ou 14, dans lequel le dispositif de balayage est un miroir de balayage ou un plateau à échantillons mobile.
